# EUROPÄISCHE PATENTSCHRIFT

(11) **EP 1 166 197 B1**
(45) Veröffentlichungstag und Bekanntmachung des Hinweises auf die Patenterteilung: **02.10.2002**
(21) Anmeldenummer: 99931248.1
(22) Anmeldetag: 03.07.1999
(51) Int. Cl.: G06F 1/18

(54) **STROMANSCHLUSS**
SUPPLY TERMINAL
CONNEXION ELECTRIQUE

(30) Priorität: 16.03.1999 DE 29904797 U
(43) Veröffentlichungstag der Anmeldung: 02.01.2002
(73) Patentinhaber: Grzelka Elektronik GmbH, 41812 Erkelenz (DE)
(72) Erfinder: GRZELKA, Dirk, D-41564 Kaarst (DE)
(74) Vertreter: Stenger, Watzke & Ring Patentanwälte
(86) Internationale Anmeldenummer: EP9904638
(87) Internationale Veröffentlichungsnummer: WO00055710

(56) Entgegenhaltungen:
- US-A- 5 753 979
- US-A- 5 836 783
- US-A- 5 852 544

## Beschreibung

Die Erfindung betrifft einen Stromanschluß für insbesondere mit Niedervoltspannung zu betreibende Peripheriegeräte eines Computers, bestehend aus einem Stromanschlußelement sowie einem Stromanschlußkabel, wobei als Stromversorgung der innerhalb des Computergehäuses angeordnete Spannungswandler vorgesehen ist, wobei das über das Stromkabel mit dem Spannungswandler in elektrischer Verbindung stehende Stromanschlußelement von außen zugänglich am Computergehäuse angeordnet ist, wobei an dem Computer ein Aufnahmeelement angeordnet ist.

Stromanschlüsse für Peripheriegeräte sind aus dem Stand der Technik bekannt. Dabei sind im Sinne der Erfindung unter Peripheriegeräte externe Eingabe- und Ausgabegeräte zu verstehen, die der Dateneingabe, -erfassung und -ausgabe dienen und als computergestützte Einheiten datentechnisch mit dem Computer in Verbindung stehen. Zu nennen sind hierbei beispielsweise magnetisch undloder optisch arbeitende Datenträgerlaufwerke, Bild- und/oder Texteingabe- und/oder Ausgabegeräte sowie Drucker. Solche computergestützten Einheiten können unter Verwendung verschiedenartiger Datenübertragungskabel mit am Computer vorgesehenen Schnittstellen datentechnisch verbunden werden, so daß Daten zwischen dem Computer und der angeschlossenen Einheit ausgetauscht werden können.

Die für den Betrieb eines Peripheriegerätes erforderliche Stromversorgung erfolgt dabei über einen externen, separaten Spannungswandler, der aus einem wenigstens eine Primär- und eine Sekundärspule aufweisenden Transformator gebildet ist. Gespeist wird der Spannungswandler mit Strom aus dem allgemeinen Stromnetz, wobei dieser im Spannungswandler umgewandelt und auf die peripheriegerätespezifische Niedervoltspannung transformiert und dem Peripheriegerät über ein Anschlußkabel zugeführt wird. Aufgrund seiner Funktionsweise erzeugt der Spannungswandler dabei ein elektromagnetisches Feld, das - wenn es nicht ausreichend abgeschirmt ist - die Funktion sowohl des am Computer angeschlossenen Peripheriegerätes als auch die des Computers selbst beeinträchtigen kann. So kann beispielsweise insbesondere die Bildausgabe eines Monitors durch eine Bildverzerrung infolge der Einwirkung eines elektromagnetischen Feldes in Mitleidenschaft gezogen werden, was auch zu einer nicht nur temporären Schädigung des Monitors führen kann. Von Nachteil ist desweiteren, daß infolge der Einwirkung eines elektromagnetischen Feldes die auf einem nach dem elektromagnetischen Prinzip arbeitenden Datenträger gespeicherten Daten bei unvorsichtiger Handhabung des Datenträgers gelöscht werden können.

Aufgrund der Tatsache, daß jedes mit dem Computer in Verbindung stehende Peripheriegerät über eine eigene externe Stromversorgung verfügt, werden die oben genannten nachteiligen Effekte infolge einer Intensitätssteigerung des elektromagnetischen Feldes bei der Verwendung mehrerer Peripheriegeräte und damit auch mehrerer Spannungswandler zudem noch verstärkt.

In nachteiliger Weise ergibt sich darüber hinaus bei der Verwendung mehrerer Peripheriegeräte eine große Anzahl an anzuschließenden und zu verlegenden Kabeln, wobei pro Spannungswandler ein Netzanschlußkabel und ein Geräteanschlußkabel vorhanden sind. Es müssen somit zum einen eine entsprechend große Anzahl von Netzanschlüssen für jedes Peripheriegerät zur Verfügung gestellt werden, zum anderen sind sämtliche Kabel unter Zuhilfenahme von Kabelführungen zu verlegen, um Kabelverwirrungen vermeiden zu können und um das visuelle Erscheinungsbild des Computerarbeitsplatzes nicht zu beeinträchtigen. Dies kann einen zum Teil erheblichen Installationsaufwand zur Folge haben.

Die US 5,852,544 beschreibt eine Computereinheit, in der ein Stromanschlußkabel mit einem Stromanschlußelement von außen zugänglich am Computergehäuse angeordnet ist. Das Stromanschlußkabel steht mit einem innerhalb des Computergehäuses angeordneten Spannungswandler in elektrischer Verbindung. Weiterhin ist eine Adaptereinheit vorgesehen, welche dazu dient, die Niedervoltspannung an dem gehäuseseitigen Anschluß abzugreifen und einem Peripheriegerät zur Energieversorgung zuzuführen. Die Niedervoltspannung kann an über einen an einem in Form eines Slotblechs ausgebildeten Aufnahmeelement fest angeordneten Steckkontakt abgegriffen werden. Der Gegenstand dieser Druckschrift bildet die Basis für den Oberbegriff des Patentanspruchs 1.

Ausgehend von diesem Stand der Technik liegt der Erfindung die **Aufgabe** zugrunde, einen Stromanschluß für insbesondere mit Niedervoltspannung zu betreibende Peripheriegeräte eines Computers der eingangs genannten Art so weiterzuentwickeln, daß er bei gleichzeitig einfacher Montage eine störungsfreie und eine die Arbeit mit dem Computer nicht beeinträchtigende Stromversorgung ermöglicht.

Zur **Lösung** dieser Aufgabe wird mit der Erfindung vorgeschlagen, daß für eine von außen zugängliche Anordnung des Stromanschlußelements eine aus dem Aufnahmeelement und einer Halteeinrichtung gebildete Befestigungseinheit vorgesehen ist.

Anstelle für die Stromversorgung jedes an den Computer anzuschließende Peripheriegerät einen separaten, externen Spannungswandler zu verwenden, wird der im Computergehäuse für die Stromversorgung des Computers bereits vorhandenen Spannungswandler auch für die Stromversorgung der an den Computer anzuschließenden Peripheriegeräte verwendet. Dabei ist für die Bereitstellung eines gut zugänglichen Stromanschlusses ein Stromanschlußelement vorgesehen, das mittels eines Stromkabels mit dem im Gehäuseinneren des Computers angeordneten Spannungswandler in elektrischer Verbindung steht. Das Stromanschlußelement ist von außen zugänglich am Computergehäuse angeordnet, so daß an den Computer anzuschließende Peripheriegeräte über eine einfach zu bedienende Steckverbindung an die Stromversorgung des Computer anschließbar sind.

Desweiteren ist es nicht mehr erforderlich, für jedes an den Computer anzuschließende Peripheriegerät einen separaten, externen Spannungswandler zur Stromversorgung vorzusehen. Hingegen können sämtliche an den Computer angeschlossene Peripheriegeräte über ein und denselben Spannungswandler mit Strom versorgt werden. Mithin wird hinsichtlich der Intensität des am Computerarbeitsplatz herrschenden elektromagnetischen Feldes eine erhebliche Reduzierung erreicht. Dies hat zum einen die Folge, daß Beeinträchtigungen der computergesteuerten Einheiten infolge der Einwirkung eines elektromagnetischen Feldes vermieden werden und daß zum anderen das Wohlbefinden des an einem solchen Computerarbeitsplatz arbeitenden Menschen verbessert wird. Aufgrund der Tatsache, daß gemäß der Erfindung die Stromversorgung der einzelnen an einen Computer angeschlossenen Peripheriegeräte nun nicht mehr über separate Spannungswandler erfolgen muß, ergibt sich zudem der Vorteil, daß auch bei der Verwendung einer großen Anzahl von Peripheriegeräten die Anzahl der zur Stromversorgung der Peripheriegeräte notwendigen Zuführungskabel erheblich vermindert wird. Um Kabelverwirrungen zu vermeiden sind somit aufwendige Kabelinstallationen nicht mehr erforderlich. Auch das visuelle Erscheinungsbild des Computerarbeitsplatzes wird durch Kabelverlegungen nicht weiter beeinträchtigt.

Die Stromversorgung eines an einen Computer angeschlossenen Peripheriegerätes unter Zuhilfenahme eines solchen Stromanschlusses eröffnet somit bei gleichzeitig einfacher Montage die Möglichkeit, die Stromversorgung des Peripheriegerätes zu gewährleisten ohne dabei die Arbeit mit dem Computer oder den Peripheriegeräten zu beeinträchtigen.

Gemäß der Erfindung ist für eine von außen zugängliche Anordnung des Stromanschlußelements eine aus dem Aufnahmelement und einer Halteeinrichtung gebildete Befestigungseinheit vorgesehen. Hierzu kann das Aufnahmeelement einen Aufnahmebereich für die formschlüssige Anordnung des Stromanschlußelements aufweisen. Zur Montage des Stromanschlusses wird das Stromanschlußelement in den Aufnahmebereich des Aufnahmeelementes eingeführt, wobei die Anordnung des Stromanschlußelements innerhalb des Aufnahmebereiches formschlüssig erfolgen kann, was in vorteilhafter Weise eine Lagefixierung des Stromanschlußelements zur Folge hat. Gemäß einer alternativen Ausgestaltung der Erfindung können zudem Rastmittel vorgesehen sein, die eine lagesichere Aufnahme des Stromanschlußelements zudem unterstützen. Nach einem Einsetzen des Stromanschlußelements im Aufnahmebereich des Aufnahmeelements wird das Aufnahmeelement über Befestigungsmittel lösbar mit der Halteeinrichtung verbunden. Die Halteeinrichtung weist eine Ausnehmung auf, durch die hindurch das Anschlußelement von außen zugänglich ist.

Gemäß einem Merkmal der Erfindung ist das Stromanschlußelement je nach verwendeter Bauart entweder als Stecker oder als Buchse ausgebildet. Für eine leichtere Montage und ein einfacheres Anschließen des Stromkabels an den Spannungsverteiler ist das spannungswandlerseitige Ende des Stromkabels mit einem Verbindungselement in Form eines Steckers oder einer Buchse versehen. Der Spannungswandler weist seinerseits ein mit dem Verbindungselement korrespondierendes Steckelement auf, so daß eine elektrische Verbindung zwischen dem Stromkabel und dem Spannungswandler des Computers auf einfache Weise hergestellt werden kann. Auf gleichfalls einfache Weise läßt sich das Stromkabel durch Trennung der Steckverbindung vom Spannungswandler wieder trennen.

Gemäß einem weiteren Merkmal der Erfindung sind das Stromanschlußelement und das Verbindungselement, sofern es sich hierbei um Stecker handelt, als 5,25-Zoll PC-Stecker ausgebildet. Für den Fall, daß Stromanschlußelement und Verbindungselement als Buchsen ausgebildet sind, wird vorgeschlagen, hierfür 5,25-Zoll PC-Buchsen zu verwenden. Sowohl bei den 5,25-Zoll PC-Steckern als auch bei den 5,25-Zoll PC-Buchsen handelt es sich um genormte Steckverbinder, deren Einsatz in vorteilhafter Weise die Kompatibilität sicherstellt und den Einbau der erfindungsgemäßen Stromanschlußbuchse in sämtlichen Rechnern ermöglicht. Insbesondere im Sinne der Nachrüstung des erfindungsgemäßen Stromanschlusses ist dies vorteilhaft.

Gemäß einem weiteren Merkmal der Erfindung weist die Halteeinrichtung für ein verdrehsicheres Anordnen von Halteeinrichtung und Aufnahmeelement einen eine Verdrehbewegung des Aufnahmeelements relativ zur Halteeinrichtung verhindemden Fortsatz auf. Dieser Fortsatz ist dabei zudem so ausgebildet, daß er die offene Seite des im Aufnahmeelement ausgebildeten Aufnahmebereiches zumindest teilweise abdeckt. Hierdurch wird in vorteilhafter Weise erreicht, daß ein in den Aufnahmebereich des Aufnahmeelements eingesetztes Stromanschlußelement in seiner Lage fixiert ist und nicht durch eine unachtsame Handhabung aus dem Aufnahmebereich herausrutschen oder sich relativ zu diesem verschieben kann. Auf diese Weise wird sichergestellt, daß das Stromanschlußelement von außen durch die Ausnehmung der Halteeinrichtung hindurch immer zugänglich und gut erreichbar ist und nicht etwa der Anschluß an das Stromanschlußelement dadurch verhindert wird, daß das Stromanschlußelement sich in seiner relativen Lage zur Halteeinrichtung verdreht und nicht mehr zur Ausnehmung in der Halteeinrichtung korrespondierend ausgerichtet ist Für den Anschluß einer Vielzahl von Peripheriegeräten können in vorteilhafter Weise auch mehrere Aufnahmeelemente an einer Halteeinrichtung angeordnet sein, wobei diese dann entsprechend viele Ausnehmungen aufweist. Gemäß einem weiteren Merkmal der Erfindung ist die Haltevorrichtung ein Slotabschlußblech, das in an sich bekannter Weise in am Computergehäuse ausgebildete Halterungen eingesetzt und mittels entsprechender Befestigungsmittel mit diesem lösbar verbindbar ist.

Gemäß einem weiteren vorteilhaften Vorschlag der Erfindung ist zur elektrischen Verbindung des mit Niedervoltspannung zu betreibenden Peripheriegerätes mit dem Stromanschlußelement eine Adaptereinheit vorgesehen. Diese Adaptereinheit weist ein Stromkabel sowie geräteseitig einen Gerätestecker und stromanschlußelementseitig ein Adapteranschlußelement auf. Dabei kann je nach Ausgestaltung des Stromanschlußelements das Adapteranschlußelement als Stecker oder als Buchse ausgebildet sein. Für den Anschluß eines Peripheriegerätes an den erfindungsgemäßen Stromanschluß ist mithin die Adaptereinheit über den geräteseitigen Stecker mit dem Peripheriegerät zu verbinden. Je nach anzuschließendem Peripheriegerät sind dabei eine Vielzahl unterschiedlicher Gerätesteckerformen möglich. Die elektrische Verbindung zwischen anzuschließendem Peripheriegerät und Spannungswandler wird sodann mittels einer einfach herzustellenden oder zu lösenden Steckverbindung zwischen Adapteranschlußelement und Stromanschlußelement hergestellt.

Gemäß einem weiteren Merkmal der Erfindung ist das Adapteranschlußelement lösbar mit der Halteeinrichtung und/oder dem Aufnahmeelement verbindbar, wozu das Adapteranschlußelement Befestigungsmittel aufweist. Auf diese Weise wird sichergestellt, daß sich das Adapteranschlußelement und das Stromanschlußelement nicht ungewollt voneinander lösen und die elektrische Verbindung zwischen Peripheriegerät und Stromanschluß unterbrochen wird. Bei den Befestigungsmitteln handelt es sich dabei gemäß einem weiteren Merkmal der Erfindung um Schrauben, die einen gerändelt ausgebildeten Schraubenkopf aufweisen und unter nur geringem Kraftaufwand einhändig betätigbar sind. Das schnelle und einfache Herstellen einer Verbindung sowie ein Lösen derselbigen ist somit gewährleistet.

Gemäß einem weiteren Merkmal der Erfindung ist das Stromanschlußsystem für die an den Rechner anzuschließenden Peripheriegeräte aus den drei Komponenten Verbindungseinheit, Befestigungseinheit sowie Adaptereinheit gebildet. In vorteilhafter Weise können diese Einzelkomponenten nach dem Baukastenprinzip miteinander kombiniert werden, so daß je nach Bauart des anzuschließenden Peripheriegerätes sowie dem jeweiligen Platzangebot entsprechend die unterschiedlichen Komponenten ausgewählt und zu einem Gesamtstromanschlußsystem zusammengesetzt werden können.

Weitere Einzelheiten, Merkmale und Vorteile der Erfindung ergeben sich anhand der nachfolgenden Beschreibung der zugehörigen Zeichnung, in der ein bevorzugtes Ausführungsbeispiel des Erfindungsgegenstandes dargestellt ist. Dabei zeigen:
- Fig. 1: eine perspektivische Darstellung eines Stromanschlußsystems;
- Fig. 2: eine Draufsicht auf eine Verbindungseinheit;
- Fig. 3: eine Seitenansicht einer Verbindungseinheit gemäß Fig. 2;
- Fig. 4: eine Draufsicht auf eine Verbindungsbuchse;
- Fig. 5: eine Draufsicht auf eine Stromanschlußbuchse;
- Fig. 6: eine perspektivische Darstellung eines Aufnahmeelementes;
- Fig. 7: eine Frontansicht einer Halteeinrichtung;
- Fig. 8: eine Seitenansicht einer Halteeinrichtung gemäß Fig. 7;
- Fig. 9: eine Seitenansicht einer Adaptereinheit;
- Fig. 10: eine Ansicht von unten gemäß Fig. 9;
- Fig. 11: eine Draufsicht auf ein Adapteranschlußelement;
- Fig. 12: eine Seitenansicht eines Befestigungsmittels und
- Fig. 13: eine Draufsicht gemäß Fig. 12.

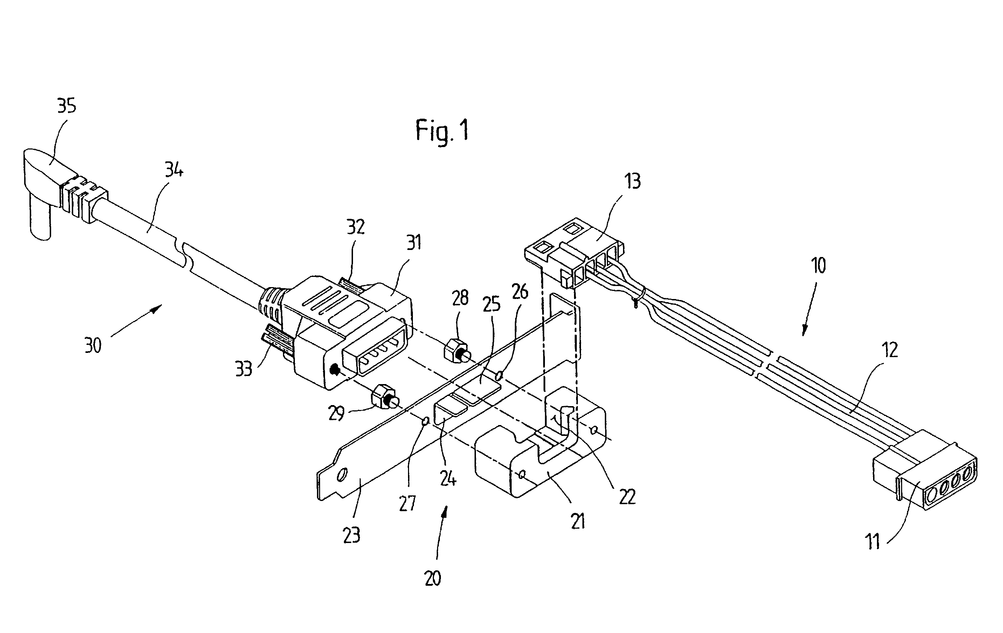

Fig. 1 zeigt in perspektivischer Darstellung ein Stromanschlußsystem, bestehend aus den drei Komponenten Verbindungseinheit 10, Befestigungseinheit 20 sowie Adaptereinheit 30.

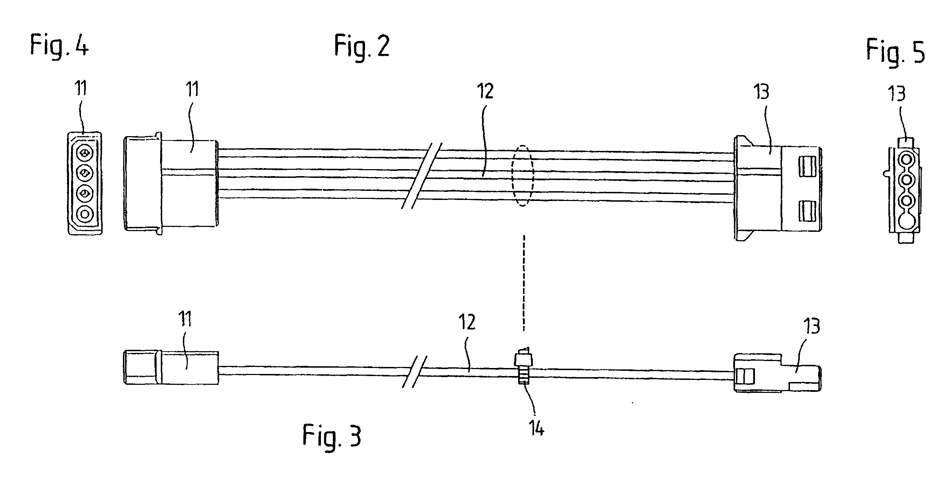

Die Verbindungseinheit 10 ist gebildet aus einem dreiadrigen Stromkabel 12, das an seinem einen Ende mit einer Stromanschlußbuchse 13 und an seinem anderen Ende mit einer Verbindungsbuchse 11 abschließt. Ein vergrößerte Darstellung der Verbindungseinheit 10 zeigen die Fig. 2 bis 5.

Die Verbindungseinheit 10 dient der elektrischen Verbindung der als Stromanschluß dienenden Stromanschlußbuchse 13 für das Anschließen eines mit einem Rechner zu verbindenden Peripheriegerätes einerseits und des im Computergehäuse angeordneten Spannungswandlers zur Stromversorgung des angeschlossenen Peripheriegerätes andererseits. Die Verbindungsbuchse 11 sowie die Stromanschlußbuchse 13 sind als genormte 5,25-Zoll PC-Buchsen ausgebildet und mithin für die Verwendung in allen gängigen Computern geeignet. Um eine Verwirrung der Einzelkabel des dreipoligen Stromkabels 12 zu vermeiden und um eine leichte Montage der Verbindungseinheit 10 gewährleisten zu können sind ringförmige Schlaufen 14 vorgesehen, die die Einzelkabel des Stromkabels 12 bündeln und eine geordnete Anordnung der Einzelkabel des Stromkabels 12 ermöglichen.

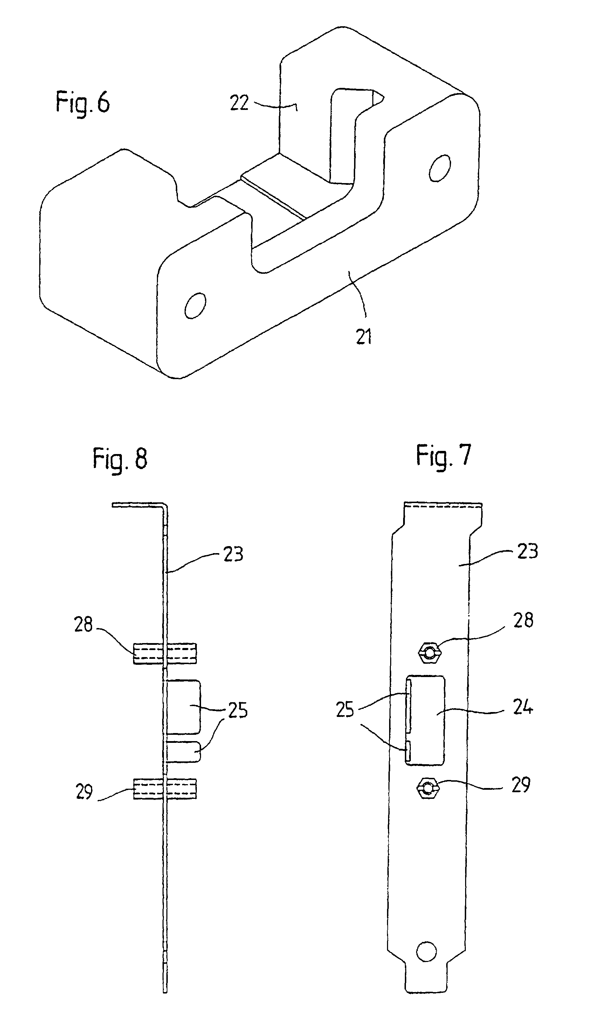

Für eine von außen zugängliche Anordnung der Stromanschlußbuchse 13 im Gehäuseinneren des Computers ist die aus Aufnahmeelement 21 und Halteeinrichtung 23 bestehende Befestigungseinheit 20 vorgesehen. Zur Befestigung der Stromanschlußbuchse 13 wird diese formschlüssig in den Aufnahmebereich 22 des Aufnahmeelementes 21 eingesetzt. Aufgrund der formschlüssigen Anordnung der Stromanschiußbuchse 13 wird eine lagesichere Fixierung erreicht, womit vermieden wird, daß sich die Stromanschlußbuchse 13, beispielsweise durch Erschütterungen, ungewollt aus ihrer Lager heraus bewegt und sich relativ zum Aufnahmeelement 21 verschiebt. Eine perspektivische Darstellung des Aufnahmeelements 21 zeigt Fig. 6.

Das Aufnahmeelement 21 wird mittels der Befestigungsmittel 28 und 29, die durch die in der Halteeinrichtung 23 ausgebildeten Bohrungen 26 und 27 hindurchgeführt werden, mit der Halteeinrichtung 23 lösbar verbunden. Die Befestigungsmittel 28 und 29 sind als Gewindestifte ausgebildet, deren Köpfe einen im Vergleich zum Gewindeschaft größeren Durchmesser aufweisen und ihrerseits mit einem Innengewinde versehen sind. Für den Zugang zur im Aufnahmeelement 21 angeordneten Stromanschlußbuchse 13 weist die Halteeinrichtung 23 eine Ausnehmung 24 auf. Diese Ausnehmung 24 ist derart ausgebildet, daß sie den direkten Zugang zum Stromanschlußelement 13 erlaubt. Für eine verdrehsichere Anordnung des Aufnahmeelements 21 an der Halteeinrichtung 23 ist an der Halteeinrichtung 23 ein Fortsatz 25 ausgebildet, der eine Relatiwerdrehung des Aufnahmeelementes 21 gegenüber der Halteeinrichtung 23 verhindert. Dieser Fortsatz 25 ist zudem derart ausgebildet, daß er die zum Einsetzen der Stromanschlußbuchse 13 in das Aufnahmeelement 21 notwendige offene Seite zumindest teilweise abdeckt. Hierdurch wird erreicht, daß sich die Stromanschlußbuchse 13 nach einem Einsetzen in das Aufnahmeelement 21 und der Montage von Halteeinrichtung 23 und Aufnahmeelement 21 nicht mehr aus dem Aufnahmebereich 22 herausbewegen kann. Auf diese Weise wird sichergestellt, daß die Stromanschlußbuchse 13 in ihrer Lage verdrehsicher und lagefixiert an der Halteeinrichtung 23 angeordnet und von außen stets gut zugänglich ist. Eine detaillierter Darstellung der Halteeinrichtung 23 zeigen die Fig. 7 und 8.

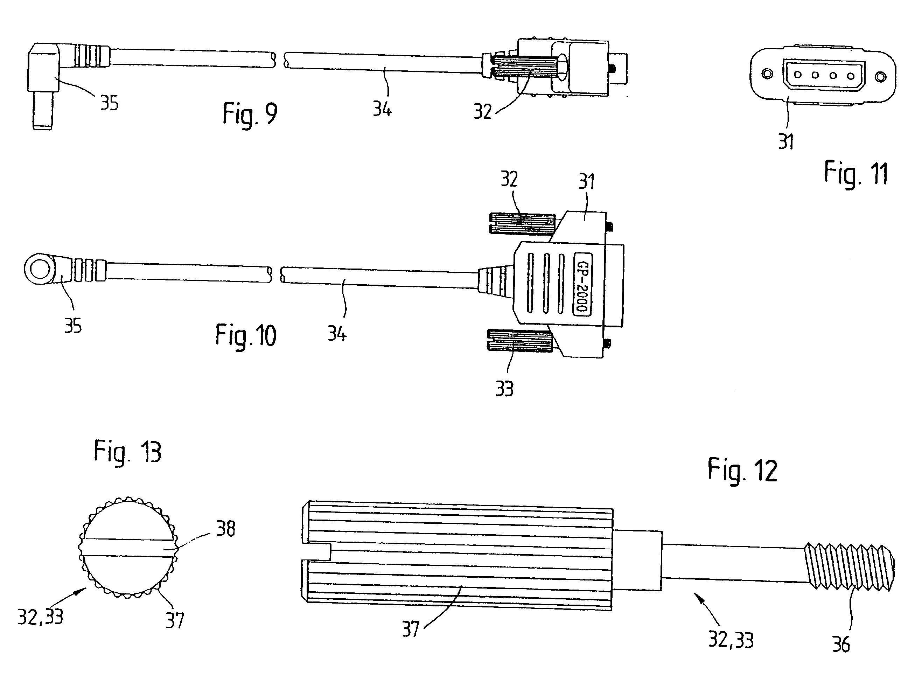

Die Adaptereinheit 30 ist gebildet aus einem Gerätestecker 35 sowie einem Adapteranschlußelement 31, wobei Adapteranschlußelement 31 und Gerätestecker 35 über ein Stromkabel 34 elektrisch miteinander in Verbindung stehen. Dabei dient die Adaptereinheit 30 der elektrischen Verbindung des an den Computer anzuschließenden Peripheriegerätes mit der Stromanschlußbuchse 13. Zu diesem Zweck wird der geräteseitige Stecker 35 mit dem anzuschließenden Peripheriegerät 35 verbunden. Je nach Peripheriegerät finden hierbei unterschiedliche Steckerformen, die an sich aus dem Stand der Technik bekannt sind, Verwendung. Bei dem stromanschlußbuchsenseitig ausgebildeten Adapteranschlußelement handelt es sich um einen Stecker, der mittels zweier Befestigungsmittel in Form von Schrauben lösbar mit der Halteeinrichtung 23 und/oder dem Aufnahmeelement 21 verbindbar ist. Zur Herstellung der elektrischen Verbindung wird das Adapteranschlußelement 31 dazu durch die in der Halteeinrichtung 23 ausgebildeten Ausnehmung 24 hindurch in die Anschlußbuchse 13 gesteckt. Zur Lagefixierung des Adapteranschlußelements 31 werden sodann die als Schrauben ausgebildeten Befestigungsmittel 32 und 33 in die Innengewinde der Befestigungsmittel 28 und 29 eingeführt und verschraubt. Auf diese Weise entsteht eine sichere und auch gegenüber Erschütterungen unempfindliche Verbindung zwischen Adapteranschlußelement 31 und Stromanschlußbuchse 13. Dabei sind die als Schrauben ausgebildeten Befestigungsmittel 32 und 33 mit einem gerändelten Schraubenkopf 37 ausgebildet, so daß diese ohne große Kraftaufbringung einhändig betätigbar sind. Für die Verwendung eines Schraubenziehers weist der Schraubenkopf 37 zudem einen Schlitz 38 auf. Eine detaillierte Darstellung der Adaptereinheit 30 sowie der Befestigungsschraube 32 bzw. 33 sind den Fig. 9 bis 13 zu entnehmen.

### Bezugszeichenliste

- 10: Verbindungseinheit
- 11: Verbindungsbuchse
- 12: Stromkabel
- 13: Stromanschlußbuchse
- 14: Schlaufe
- 20: Befestigungseinheit
- 21: Aufnahmeelement
- 22: Aufnahmebereich
- 23: Halteeinrichtung
- 24: Ausnehmung
- 25: Fortsatz
- 26: Bohrung
- 27: Bohrung
- 28: Befestigungsmittel
- 29: Befestigungsmittel
- 30: Adaptereinheit
- 31: Adapteranschlußelement
- 32: Befestigungsmittel
- 33: Befestigungsmittel
- 34: Stromkabel
- 35: Gerätestecker
- 36: Gewinde
- 37: Kopf
- 38: Schlitz

## Patentansprüche

1. Stromanschluß für insbesondere mit Niedervoltspannung zu betreibende Peripheriegeräte eines Computers, bestehend aus einem Stromanschlußelement (13) sowie einem Stromanschlußkabel (12), wobei als Stromversorgung der innerhalb des Computergehäuses angeordnete Spannungswandler vorgesehen ist, wobei das über das Stromkabel (12) mit dem Spannungswandler in elektrischer Verbindung stehende Stromanschlußelement (13) von außen zugänglich am Computergehäuse angeordnet ist, wobei an dem Computer ein Aufnahmeelement (21) angeordnet ist,
**dadurch gekennzeichnet,**
**daß** für eine von außen zugängliche Anordnung des Stromanschlußelements (13) eine aus dem Aufnahmeelement (21) und einer Halteeinrichtung (23) gebildete Befestigungseinheit (20) vorgesehen ist.

2. Stromanschluß nach Anspruch 1, **dadurch gekennzeichnet, daß** das Stromanschlußelement (13) ein Stecker ist.

3. Stromanschluß nach Anspruch 1, **dadurch gekennzeichnet, daß** das Stromanschlußelement (13) eine Buchse ist.

4. Stromanschluß nach einem der Ansprüche 1 bis 3, **dadurch gekennzeichnet, daß** das Stromkabel (12) spannungswandlerseitig ein Verbindungselement (11) in Form eines Steckers oder einer Buchse aufweist.

5. Stromanschluß nach einem der Ansprüche 2 oder 4, **dadurch gekennzeichnet, daß** das Stromanschlußelement (13) und das Verbindungselement (11) als 5,25-Zoll PC-Stecker ausgebildet sind.

6. Stromanschluß nach einem der Ansprüche 3 oder 4, **dadurch gekennzeichnet, daß** das Stromanschlußelement (13) und das Verbindungselement (11) als 5,25-Zoll PC-Buchse ausgebildet sind.

7. Stromanschluß nach einem der vorhergehenden Ansprüche, **dadurch gekennzeichnet, daß** die Halteeinrichtung (23) ein Slotabschlußblech ist.

8. Stromanschluß nach einem der vorhergehenden Ansprüche, daß das Aufnahmeelement (21) einen Aufnahmebereich (22) für die formschlüssige Anordnung des Stromanschlußelements (13) aufweist.

9. Stromanschluß nach einem der vorhergehenden Ansprüche, **dadurch gekennzeichnet, daß** die Halteeinrichtung (23) und das Aufnahmeelement (21) lösbar miteinander verbindbar sind.

10. Stromanschluß nach einem der vorhergehenden Ansprüche, daß die Halteeinrichtung (23) für eine verdrehsichere Anordnung von Halteeinrichtung (23) und Aufnahmeelement (21) einen eine Verdrehbewegung des Aufnahmeelements (21) relativ zur Halteeinrichtung (23) verhindernden Fortsatz (25) aufweist.

11. Stromanschluß nach Anspruch 10, **dadurch gekennzeichnet, daß** der Fortsatz (25) derart ausgebildet ist, daß dieser die offene Seite des im Aufnahmeelements (21) ausgebildeten Aufnahmebereichs (22) zumindest teilweise abdeckt.

12. Stromanschluß nach einem der vorhergehenden Ansprüche, **dadurch gekennzeichnet, daß** zur elektrischen Verbindung des mit Niedervoltspannung zu betreibenden Peripheriegerätes mit dem Stromanschlußelement (13) eine Adaptereinheit (30) vorgesehen ist.

13. Stromanschluß nach Anspruch 12, **dadurch gekennzeichnet, daß** die Adaptereinheit (30) ein Stromkabel (34) sowie geräteseitig einen Gerätestecker (35) und stromanschlußelementseitig ein Adapteranschlußelement (31) aufweist.

14. Stromanschluß nach Anspruch 13, **dadurch gekennzeichnet, daß** das Adapteranschlußelement (31) ein Stecker ist.

15. Stromanschluß nach einem der Ansprüche 13 oder 14, **dadurch gekennzeichnet, daß** das Adapteranschlußelement (21) lösbar mit der Halteeinrichtung (23) und/oder dem Aufnahmeelement (21) verbindbar ist, wozu das Adapteranschlußelement (31) Befestigungsmittel (33) aufweist.

16. Stromanschluß nach Anspruch 15, **dadurch gekennzeichnet, daß** die Befestigungsmittel (33) Schrauben mit einem gerändelt ausgebildeten Schraubenkopf sind und einhändig betätigbar sind.

17. Stromanschlußsystem nach einem der vorhergehenden Ansprüche, **gekennzeichnet durch** eine Verbindungseinheit (10), eine Befestigungseinheit (20) und eine Adaptereinheit (30).

## Claims

1. Power connection for peripheral devices, in particular those to be operated with low voltage, of a computer, comprising a power connection element (13) and a power connection cable (12), the power supply provided being the voltage converter arranged within the computer housing, the current connection element (13) connected electrically to the voltage converter via the power cable (12) being arranged on the computer housing such that it is externally accessible, a holding element (21) being arranged on the computer, **characterized in that**, for an externally accessible arrangement of the power connection element (13), a fastening unit (20) formed from the holding element (21) and a retaining device (23) is provided.

2. Power connection according to Claim 1, **characterized in that** the power connection element (13) is a plug.

3. Power connection according to Claim 1, **characterized in that** the power connection element (13) is a socket.

4. Power connection according to one of Claims 1 to 3, **characterized in that**, on the side of the voltage converter, the power cable (12) has a connecting element (11) in the form of a plug or of a socket.

5. Power connection according to either of Claims 2 and 4, **characterized in that** the power connection element (13) and the connecting element (11) are designed as a 5.25-inch PC plug.

6. Power connection according to either of Claims 3 and 4, **characterized in that** the power connection element (13) and the connecting element (11) are designed as a 5.25-inch PC socket.

7. Power connection according to one of the preceding claims, **characterized in that** the retaining device (23) is a slot blanking plate.

8. Power connection according to one of the preceding claims, **characterized in that** the holding element (21) has a holding region (22) for the form-fitting arrangement of the power connection element (13).

9. Power connection according to one of the preceding claims, **characterized in that** the retaining device (23) and the holding element (21) can be detachably connected to each other.

10. Power connection according to one of the preceding claims, **characterized in that**, for an antirotation arrangement of retaining device (23) and holding element (21), the retaining device (23) has an extension (25) that prevents rotational movement of the holding element (21) relative to the retaining device (23).

11. Power connection according to Claim 10, **characterized in that** the extension (25) is designed in such a way that the latter at least partly covers the open side of the holding region (22) formed in the holding element (21).

12. Power connection according to one of the preceding claims, **characterized in that** an adapter unit (30) is provided for the electrical connection of the peripheral device to be operated with low voltage to the power connection unit (13).

13. Power connection according to Claim 12, **characterized in that** the adapter unit (30) has a power cable (34) and, on the device side, a device plug (35) and, on the side of the power connection element, an adapter connection element (31).

14. Power connection according to Claim 13, **characterized in that** the adapter connection element (31) is a plug.

15. Power connection according to either of Claims 13 and 14, **characterized in that** the adapter connection element (21) can be detachably connected to the retaining device (23) and/or the holding element (21), for which purpose the adapter connection element (31) has fastening means (33).

16. Power connection according to Claim 15, **characterized in that** the fastening means (33) are screws with a screw head of milled design and can be operated with one hand.

17. Power connection according to one of the preceding claims, **characterized by** a connecting unit (10), a fastening unit (20) and an adapter unit (30).

## Revendications

1. Raccordement électrique pour notamment des périphériques d'ordinateur à exploiter à basse tension, constitué d'un élément de raccordement électrique (13) ainsi que d'un câble de raccordement électrique (12), le transformateur de tension placé à l'intérieur du boîtier de l'ordinateur étant prévu comme bloc d'alimentation, l'élément de raccordement électrique (13), restant en liaison électrique avec le transformateur de tension à l'aide du câble d'alimentation (12), étant placé sur le boîtier de l'ordinateur de manière accessible depuis l'extérieur, un élément de réception (21) étant placé sur l'ordinateur, **caractérisé en ce qu**'une unité de fixation (20) formée par l'élément de réception (21) et par un dispositif de maintien (23) est prévue pour une disposition accessible depuis l'extérieur de l'élément de raccordement électrique (13).

2. Raccordement électrique selon la revendication 1, **caractérisé en ce que** l'élément de raccordement électrique (13) est une fiche mâle.

3. Raccordement électrique selon la revendication 1, **caractérisé en ce que** l'élément de raccordement électrique (13) est un jack.

4. Raccordement électrique selon l'une quelconque des revendications 1 à 3, **caractérisé en ce que** le câble d'alimentation (12) présente un élément de raccordement (11) formé comme une fiche mâle ou un jack.

5. Raccordement électrique selon l'une quelconque des revendications 2 ou 4, **caractérisé en ce que** l'élément de raccordement électrique (13) et l'élément de raccordement (11) sont formés comme une fiche PC mâle de 5,25 pouces.

6. Raccordement électrique selon l'une quelconque des revendications 3 ou 4, **caractérisé en ce que** l'élément de raccordement électrique (13) et l'élément de raccordement (11) sont formés comme un jack PC de 5,25 pouces.

7. Raccordement électrique selon l'une quelconque des revendications précédentes, **caractérisé en ce que** le dispositif de maintien (23) est une plaque de fermeture d'un emplacement.

8. Raccordement électrique selon l'une quelconque des revendications précédentes, **caractérisé en ce que** l'élément de réception (21) présente une partie de réception (22) pour la disposition par conjonction de forme de l'élément de raccordement électrique (13).

9. Raccordement électrique selon l'une quelconque des revendications précédentes, **caractérisé en ce que** le dispositif de maintien (23) et l'élément de réception (21) peuvent être raccordés entre eux de manière amovible.

10. Raccordement électrique selon l'une quelconque des revendications précédentes, **caractérisé en ce que** le dispositif de maintien (23), pour une disposition anti-rotulante du dispositif de maintien (23) et de l'élément de réception (21), présente un prolongement (25) empêchant un mouvement de rotation de l'élément de réception (21) par rapport au dispositif de maintien (23).

11. Raccordement électrique selon la revendication 10, **caractérisé en ce que** le prolongement (25) est formé de telle sorte que celui-ci couvre au moins partiellement le côté ouvert de la partie de réception (22) formée dans l'élément de réception (21).

12. Raccordement électrique selon l'une quelconque des revendications précédentes, **caractérisé en ce qu'**une unité d'adaptateur (30) est prévue pour le raccordement électrique du périphérique à exploiter en basse tension à l'élément de raccordement électrique (13).

13. Raccordement électrique selon la revendication 12, **caractérisé en ce que** l'unité d'adaptateur (30) présente un câble d'alimentation (34), ainsi qu'un socle connecteur (35) du côté de l'appareil, et un élément de raccordement d'adaptateur (31) du côté de l'élément de raccordement électrique (13).

14. Raccordement électrique selon la revendication 13, **caractérisé en ce que** l'élément de raccordement d'adaptateur (31) est une fiche mâle.

15. Raccordement électrique selon l'une quelconque des revendications 13 ou 14, **caractérisé en ce que** l'élément de raccordement d'adaptateur (21 ou 31 ?) peut être raccordé de manière amovible au dispositif de maintien (23) et/ou à l'élément de réception (21), ce pour quoi l'élément de raccordement d'adaptateur (31) présente des moyens de fixation (33).

16. Raccordement électrique selon la revendication 15, **caractérisé en ce que** les moyens de fixation sont des vis avec une tête de vis formée de manière moletée et peuvent être actionnés d'une seule main.

17. Système de raccordement électrique selon l'une quelconque des revendications précédentes, **caractérisé par** une unité de raccordement (10), une unité de fixation (20) et une unité d'adaptateur (30).
